Europäisches Patentamt

European Patent Office

Office européen des brevets

(11) Numéro de publication: **0 601 593 A2**

# (12) DEMANDE DE BREVET EUROPEEN

(21) Numéro de dépôt: 93119958.2

(22) Date de dépôt: **10.12.93**

(51) Int. Cl.5: **H02M 3/07**, H02M 7/217

(30) Priorité: **11.12.92 FR 9214983**

(43) Date de publication de la demande:
**15.06.94 Bulletin 94/24**

(84) Etats contractants désignés:
**CH DE GB LI NL SE**

(71) Demandeur: **MOULINEX S.A.**
**11, rue Jules-Ferry**
**F-93170 Bagnolet(FR)**

(72) Inventeur: **Parise, Vital, Moulinex S.A.**
**8, Rue du Colonel Rémy**
**F-14052 Caen Cedex(FR)**
Inventeur: **Seibert, Manfred, Moulinex S.A.**
**8, Rue du Colonel Rémy**
**F-14052 Caen Cedex(FR)**

(74) Mandataire: **May, Hans Ulrich, Dr.**
**Patentanwalt Dr.H.U.May,**
**Thierschstrasse 27**
**D-80538 München (DE)**

(54) **Dispositif d'alimentation à multiplicateur de courant.**

(57) Ce dispositif est destiné à être relié à une source de courant et à fournir sous une tension inférieure à celle de la source, à une charge $(Z_L)$, un courant redressé d'intensité moyenne supérieure à l'intensité moyenne du courant prélevé sur la source. Selon l'invention, le dispositif comprend au moins une capacité de sortie $(C_S)$ montée en parallèle aux bornes de ladite charge, au moins une capacité intermédiaire $(C_I)$ destinée à stocker temporairement une charge $(Q)$ et montée en série avec la capacité $(C_S)$ dans un circuit dit de charge destiné à charger la capacité $(C_S)$ et la capacité $(C_I)$, au moins un circuit de transfert commandé par des moyens de commutation et reliant les bornes de la capacité intermédiaire $(C_I)$ aux bornes de la capacité de sortie $(C_S)$ de manière à transférer la charge $(Q)$ à la capacité $(C_S)$, et des moyens d'interdiction $(D_2,D_3)$ des interactions entre le circuit de charge et le circuit de transfert.

FIG. 1

L'invention se rapporte à un dispositif permettant d'alimenter en permanence un circuit sous basse tension à partir d'une source de courant telle que par exemple le secteur alternatif de distribution de courant.

L'invention concerne, plus particulièrement, un dispositif d'alimentation destiné à être relié à ladite source de courant et à fournir, sous une tension inférieure à celle de la source, à au moins une charge $Z_L$, un courant redressé d'intensité moyenne supérieure à l'intensité moyenne du courant prélevé sur la source.

Dans les dispositifs connus d'alimentation, on utilise en général un transformateur ; cette solution présente cependant des inconvénients liés à l'encombrement et au coût de ce composant.

Dans d'autres dispositifs, on envisage d'utiliser un pont diviseur pour abaisser la tension : ce dispositif a le désavantage de consommer un courant important dans une résistance de limitation qui dissipe en général par effet Joule une grande quantité d'énergie.

L'invention a pour but de réaliser, autour de composants très courants et de faible coût, une alimentation fiable et susceptible d'alimenter en permanence une charge telle que, par exemple un circuit électronique, avec un courant redressé dont l'intensité moyenne est supérieure à l'intensité du courant de la source a laquelle le dispositif est relié.

Selon l'invention, le dispositif comprend au moins une capacité dite de sortie montée en parallèle aux bornes de ladite charge, au moins une capacité dite intermédiaire destinée à stocker temporairement une charge électrique et montée en série avec la capacité de sortie dans un circuit dit de charge destiné à charger la capacité de sortie et la capacité intermédiaire à partir d'un courant prélevé sur la source de courant, au moins un circuit de transfert commandé par des moyens de commutation et reliant les bornes de la capacité intermédiaire aux bornes de la capacité de sortie de manière à transférer ladite charge accumulée dans la capacité intermédiaire à la capacité de sortie, et des moyens d'interdiction des interactions entre le circuit de charge et le circuit de transfert.

Grâce à l'invention, il est possible de réaliser une alimentation simple à multiplicateur de courant présentant un encombrement très réduit, adaptée à un usage en continu, de faible consommation et ne dissipant donc que très peu d'énergie par effet Joule.

Les caractéristiques, détails et avantages de l'invention ressortiront d'ailleurs de la description qui va suivre, à titre d'exemple, en référence aux dessins annexés dans lesquels :

- la figure 1 représente un schéma électrique d'un dispositif selon l'invention où le courant moyen parcourant la charge est le double du courant moyen parcourant une résistance de limitation,
- la figure 2 représente un schéma électrique d'un dispositif selon l'invention destiné à alimenter deux charges et où le courant moyen traversant les charges est quatre fois supérieur au courant moyen parcourant la résistance de limitation.

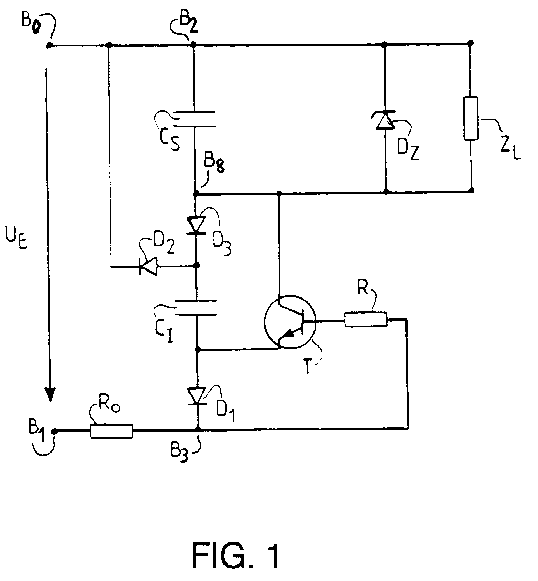

Le dispositif d'alimentation illustré à la figure 1 est destiné à être relié à une source de courant alternatif représentée par les bornes $B_0$-$B_1$ et à fournir à au moins une charge $Z_L$ un courant redressé d'intensité moyenne supérieure à l'intensité moyenne du courant prélevé sur la source.

Ce dispositif comprend au moins une capacité dite de sortie $C_S$ montée en parallèle aux bornes de ladite charge, au moins une capacité dite intermédiaire $C_I$ destinée à stocker temporairement une charge électrique Q et montée en série avec la capacité de sortie $C_S$ dans un circuit dit de charge destiné à charger la capacité de sortie $C_S$ et la capacité intermédiaire $C_I$ à partir d'un courant prélevé sur la source de courant, au moins un circuit de transfert commandé par des moyens de commutation $\underline{T}$ et reliant les bornes de la capacité intermédiaire $C_I$ aux bornes de la capacité de sortie $C_S$ de manière à transférer la charge Q accumulée dans la capacité intermédiaire $C_I$ à la capacité de sortie $C_S$, et des moyens d'interdiction des interactions entre le circuit de charge et le circuit de transfert.

Une résistance $R_0$ montée en série dans le circuit de charge est destinée à limiter le courant de charge. Le circuit de charge comprend également des moyens de redressement du courant $D_1$ qui autorisent le passage d'un courant de charge prélevé à la source et qui isolent le circuit dit de charge de la source pendant le transfert des charges électriques de la capacité intermédiaire $C_I$ à la capacité de sortie $C_S$.

Conformément à l'invention, le procédé de charge est le suivant : on charge dans un premier temps la capacité de sortie $C_S$ et la capacité intermédiaire $C_I$ avec un courant fourni par la source de courant, tandis que dans un deuxième temps on transfère la charge accumulée dans ladite capacité intermédiaire $C_I$ dans la capacité de sortie $C_S$ au moyen du circuit de transfert qui relie les bornes de la capacité intermédiaire $C_I$ à celles de la capacité de sortie $C_S$.

Le dispositif selon la figure 1 comprenant une seule capacité de sortie et une seule capacité intermédiaire est une réalisation particulière de l'invention.

Selon un mode de réalisation préféré, l'invention porte également et plus généralement sur un dispositif qui comporte $\underline{n}$ capacités intermédiaires

montées en série dans le circuit de charge et associés à $n$ circuits de transfert, eux-mêmes associés à $n$ moyens d'interdiction et $n$ moyens de commutation.

Si on désigne dans l'ordre par $C_{In}$ à $C_{I1}$ les $n$ capacités intermédiaires montées en série dans le circuit de charge à la suite de la capacité de sortie, un nombre de circuits de transfert $n$ relie respectivement une $i^{ème}$ capacité $C_{Ii}$ où $i$ est un indice variant de 1 à N-1 à une portion du circuit de charge comprenant la capacité de sortie et dans l'ordre les capacités intermédiaires $C_{In}$ à $C_{In+1}$. Le $n^{ième}$ circuit de transfert relie les bornes de la $n^{ième}$ capacité $C_{IN}$ aux bornes de la capacité de sortie.

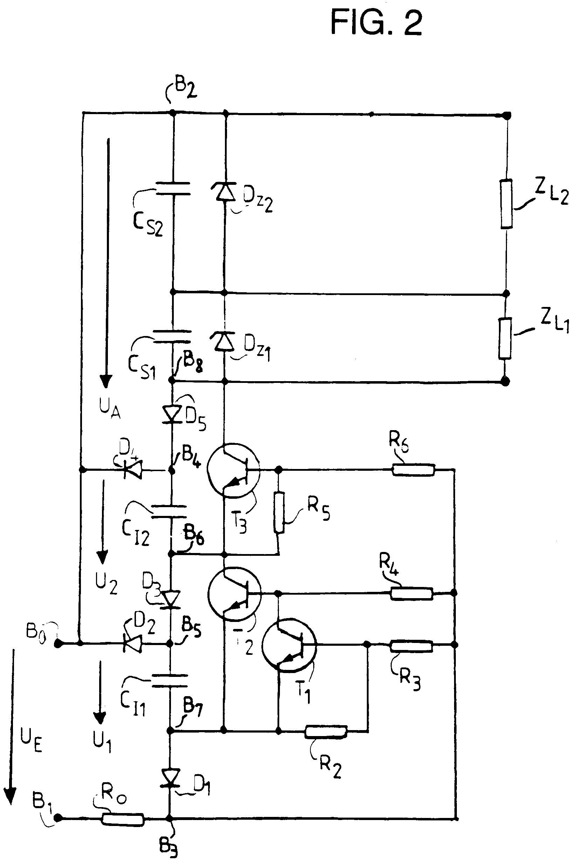

Ainsi, comme représenté, la figure 2 illustre une réalisation particulière du dispositif destiné à être relié à une source de courant alternatif comprenant deux capacités de sortie et deux capacités intermédiaires.

Effectivement, le circuit de charge comprend en série et dans l'ordre deux capacités de sortie $C_{S2}$ et $C_{S1}$, une diode de polarisation $D_5$, une capacité intermédiaire $C_{I2}$, une diode de polarisation $D_3$, une capacité intermédiaire $C_{I1}$, une diode $D_1$ et une résistance de limitation $R_0$. Le circuit de charge est ainsi relié à la source de courant par la borne $B_2$ de la capacité $C_{S2}$ et la borne $B_1$ via la résistance $R_0$, tandis que deux branches de circuit de transfert comprenant respectivement deux diodes $D_4$ et $D_2$, relient la borne $B_0$ de la source de courant à des bornes $B_4$ et $B_5$ situées respectivement entre la diode $D_5$ et la capacité $C_{I2}$ et entre la diode $D_3$ et la capacité $C_{I1}$. Les moyens de commutation sont réalisés à partir de transistors $T_2$ et $T_3$ (du type NPN) destinés à ouvrir et fermer successivement des branches des deux circuits de transfert, lesdites branches reliant respectivement une borne $B_6$ située à la jonction de la capacité $C_{I2}$ et de la diode $D_3$ à une borne $B_7$ située à la jonction de la capacité $C_{I1}$ avec la diode $D_1$ et à une borne $B_8$ située à la jonction de la capacité $C_{S1}$ avec la diode $D_5$.

Comme représenté le dispositif comprend également un transistor $T_1$ formant avec les transistors $T_2$ et $T_3$ un étage de commutation. La base du transistor $T_1$ est relié à la borne $B_3$ via une résistance $R_3$ et à la borne $B_7$, ainsi qu'aux émetteurs des transistors $T_2$ et $T_1$, via une résistance $R_2$.

La base des transistors $T_3$ et $T_2$ sont reliées à la borne $B_3$ respectivement par des résistances $R_6$ et $R_4$. La base du transistor $T_2$ est reliée directement au collecteur du transistor $T_1$ et son collecteur est relié d'une part à l'émetteur du transistor $T_3$ et à la borne $B_6$, et d'autre part à la base du transistor $T_3$ via une résistance $R_5$.

Selon le procédé de fonctionnement de ce circuit, on charge les capacités de sortie $C_{S1}$ et $C_{S2}$ et les capacités intermédiaires $C_{I1}$ et $C_{I2}$ avec un courant fourni par la source de courant, on transfère une charge électrique accumulée dans la capacité intermédiaire $C_{I1}$ aux capacités intermédiaires $C_{I2}$, ainsi qu'aux capacités de sortie $C_{S1}$ et $C_{S2}$, puis on transfère une charge électrique accumulée dans la capacité intermédiaire $C_{I2}$ aux capacités de sortie, de manière à alimenter les charges $Z_{L1}$ et $Z_{L2}$ avec un courant moyen quatre fois supérieur à celui du courant prélevé à la source.

Le fonctionnement du dispositif d'alimentation selon l'invention sera décrit en référence à la figure 2 de manière à mieux illustrer le transfert des charges des capacités entre elles pour quadrupler le courant. Sur la figure 2, l'origine des potentiels est prise sur la borne $B_0$ et l'on désigne par $U_A$ la tension aux bornes du dipôle constitué par les deux capacités $C_{S1}$ et $C_{S2}$ en série, $U_1$ et $U_2$, respectivement les tensions aux bornes des capacités $C_{I1}$ et $C_{I2}$ et $U_E$ la tension alternative de la source.

Le fonctionnement du circuit est régi par la valeur instantanée de la tension alternative de la source. Lorsque la tension $U_E$ est inférieure à la somme des tensions $U_1$ + $U_2$ + $U_A$, les capacités $C_{S1}$, $C_{S2}$, $C_{I1}$ et $C_{I2}$ sont chargées en série dans le circuit de charge par un courant de charge circulant de $B_0$ vers $B_1$. On appellera Q la charge accumulée en régime stationnaire pendant cette phase dans les capacités.

Quand la tension $U_E$ devient supérieure à - $U_1$ et si la tension $U_1$ est supérieure à $U_2$ + $U_A$, la capacité $C_{I1}$ est déchargée à une tension $U_2$ + $U_A$ et une charge électrique Q - $\epsilon$ est transférée dans $C_{S1}$, $C_{S2}$ et $C_{I2}$ via le transistor $T_2$ et la diode $D_2$ par un courant circulant de la borne $B_5$ à la borne $B_7$, la charge électrique $\epsilon$ étant petite par rapport à Q. Cette charge $\epsilon$, correspondant à une charge résiduelle du condensateur $C_{I1}$, sera transférée dans une phase ultérieure du fonctionnement.

Lorsque la tension $U_E$ devient supérieure à - $U_1$ + $R_3/R_2$ X $U_{T1}$, $U_{T1}$ étant la tension de base du transistor $T_1$, le transistor $T_1$ devient conducteur, $T_2$ est bloqué et la capacité $C_1$ n'est plus déchargée.

Lorsque la tension $U_E$ est supérieure à - $U_2$ + $R_5/R_6$ X $U_{T3}$, $U_{T3}$ étant la tension de base du transistor $T_3$, le transistor $T_3$ devient conducteur, les transistors $T_1$ et $T_2$ étant bloqués et la capacité $C_{I2}$ est déchargée à une tension $U_A$.

Une charge de 2 X Q de $C_{I2}$ est transférée aux capacités $C_{S1}$ et $C_{S2}$ par un courant circulant de la borne $B_4$ à la borne $B_6$ via le transistor $T_3$ et la diode $D_4$.

Effectivement, la capacité $C_{I2}$ aura été chargée une première fois d'une valeur Q par le circuit de charge et une seconde fois d'une valeur Q consécutivement aux transferts de charges à partir de $C_{I1}$.

Lorsque la tension $U_E$ diminue et atteind une valeur comprise entre - $U_1$ + $R_3/R_2$ X $U_{T1}$ et - $U_2$ + $R_6/R_5$ X $U_{T3}$, on se retrouve comme précédemment dans un état où le transistor $T_1$ conduit, mais où les transistors $T_2$ et $T_3$ sont bloqués empêchant le transfert de charge à partir des capacités intermédiaires.

Lorsque la tension $U_E$ chute encore et atteind une valeur comprise entre - $U_1$ et - $U_1$ + $R_3/R_2$ X $U_{T1}$, et comme la tension $U_A$ + $U_2$ a diminué entre temps, essentiellement en raison de la décharge de la capacité $C_{I2}$ dans les capacités de sortie $C_{S1}$ et $C_{S2}$ et de la décharge des capacités de sortie dans les charges $Z_{L1}$ et $Z_{L2}$, la capacité $C_{I1}$ va pouvoir se décharger encore jusqu'à la nouvelle tension $U_2$ + $U_A$ et la charge $\epsilon$ va être finalement transférée aux capacités $C_{I2}$, $C_{S1}$ et $C_{S2}$. Globalement, pendant une période, les capacités de sortie $C_{S1}$ et $C_{S2}$ auront été chargées par une charge électrique valant 4 X Q. Une première charge électrique Q résultant de la charge directe sur le circuit de charge, une seconde charge électrique Q-$\epsilon$ + $\epsilon$ résultant des transferts de charges à partir de la capacité $C_{I1}$ et une charge électrique Q + Q-$\epsilon$ + $\epsilon$ résultant du transfert de charges à partir de la capacité $C_{I2}$. Les capacités de sortie $C_{S1}$ et $C_{S2}$ sont continûment déchargées dans les charges $Z_{L1}$ et $Z_{L2}$ reliées à leurs bornes.

En régime stationnaire, la tension $U_A$ à un temps t = 0 sera égale à la tension $U_A$ à un temps T, où T est la période du courant de la source, et le courant ayant parcouru les charges $Z_{L1}$ et $Z_{L2}$ aura été en moyenne sur la période T quatre fois supérieure au courant débité par la source. Par conséquent, le courant ayant parcouru la résistance de limitation $R_0$ aura également été quatre fois plus faible.

Des diodes Zener $D_{Z1}$ et $D_{Z2}$ sont montées en parallèle sur les charges $Z_{L1}$ et $Z_{L2}$ à la sortie du circuit afin d'assurer une alimentation de ces charges sous une tension stable.

Par ailleurs, dans une réalisation non représentée particulièrement adaptée à un dispositif d'alimentation selon l'invention destiné à être relié à une source de courant continu, le circuit de charge est tout comme les circuits de transfert commandé par des moyens de commutation, les moyens de commutation du circuit et de charge et des circuits de transfert étant reliés à une horloge de synchronisation pilotant les moyens de commutation.

Les moyens de commutation synchronisée permettent de connecter ou de déconnecter le circuit de charge à la source et de réaliser les transferts consécutifs de charges conformément au procédé de fonctionnement du dispositif selon l'invention.

Finalement et grâce à un dispositif selon l'invention, il est possible, à partir d'une source telle que le secteur, d'alimenter une charge telle que, par exemple, un petit circuit électronique de veille.

Ce dispositif trouvera avantageusement une application dans des équipements de domotique, notamment des prises de courant télécommandées.

**Revendications**

1. Dispositif d'alimentation destiné à être relié à une source de courant et à fournir sous une tension inférieure à celle de la source, à au moins une charge ($Z_L$), un courant redressé d'intensité moyenne supérieure à l'intensité moyenne du courant prélevé sur la source, **caractérisé en ce qu'**il comprend au moins une capacité dite de sortie ($C_S$) montée en parallèle aux bornes de ladite charge, au moins une capacité dite intermédiaire ($C_I$) destinée à stocker temporairement une charge électrique (Q) et montée en série avec la capacité de sortie ($C_S$) dans un circuit dit de charge destiné à charger la capacité de sortie ($C_S$) et la capacité intermédiaire ($C_I$) à partir d'un courant prélevé sur la source de courant, au moins un circuit de transfert commandé par des moyens de commutation et reliant les bornes de la capacité intermédiaire ($C_I$) aux bornes de la capacité de sortie ($C_S$) de manière à transférer la charge (Q) accumulée dans la capacité intermédiaire ($C_I$) à la capacité de sortie ($C_S$), et des moyens d'interdiction ($D_2$,$D_3$) des interactions entre le circuit de charge et le circuit de transfert.

2. Dispositif d'alimentation selon la revendication 1, **caractérisé en ce que** la source de courant est une source de courant alternatif et en ce que le circuit de charge comprend des moyens de redressement ($D_1$) du courant et une résistance de charge ($R_0$).

3. Dispositif d'alimentation selon la revendication 1, **caractérisé en ce que** la source de courant est une source de courant continu et le circuit de charge est également commandé par des moyens de commutation, les moyens de commutation du circuit de charge et du circuit de transfert étant reliés à une horloge de synchronisation apte à piloter lesdits moyens de commutation.

4. Dispositif d'alimentation selon la revendication 1, **caractérisé en ce que** les moyens d'interdiction comportent deux diodes de polarisation ($D_2$,$D_3$) placées respectivement en série dans le circuit de charge entre les deux capacités de sorties ($C_S$) et intermédiaire ($C_I$) et dans le circuit de transfert.

5. Dispositif d'alimentation selon l'une quelconque des revendications 1 à 4, **caractérisé en ce qu'**il comporte en outre $n$ capacités ($C_I$) intermédiaires montées en série dans le circuit de charge et associés à $n$ circuits de transfert, eux-mêmes associés à $n$ moyens d'interdiction ($D_3$ à $D_5$) et $n$ moyens de commutation ($T_1$, $T_2$, $T_3$).

6. Dispositif d'alimentation selon l'une quelconque des revendications 1 à 5, **caractérisé en ce qu'**il comprend plusieurs capacités de sortie ($C_{S1}$, $C_{S2}$) montées en série dans le circuit de charge.

7. Dispositif d'alimentation selon les revendications 5 et 6, **caractérisé en ce que** le circuit de charge comprend en série et dans l'ordre deux capacités de sortie ($C_{S2}$ et $C_{S1}$), une diode de polarisation ($D_5$), une capacité intermédiaire ($C_{I2}$), une diode de polarisation ($D_3$), une capacité intermédiaire ($C_{I1}$), une diode ($D_1$) et une résistance ($R_0$), le circuit de charge étant relié à la source de courant via la capacité ($C_{S2}$) et la résistance ($R_0$), tandis que deux branches du circuit de transfert comprenant chacune une diode (respectivement ($D_4$) et ($D_2$)) relient la borne de la source de courant à des bornes ($B_4$ et $B_5$) situées respectivement entre la diode ($D_5$) et la capacité ($C_{I2}$) et entre la diode ($D_3$) et la capacité ($C_{I1}$), et en ce que les moyens de commutation sont réalisés à partir de trois transistors ($T_1$, $T_2$ et $T_3$) destinés à ouvrir et fermer successivement des branches du circuit de transfert, lesdites branches reliant respectivement uns borne située à la jonction de la capacité ($C_{I2}$) et de la diode ($D_3$) à une borne située à la jonction de la capacité ($C_{I1}$) avec la diode ($D_1$) et d'une borne située à la jonction de la capacité ($C_{S1}$) avec la diode ($D_5$).

8. Procédé de fonctionnement du dispositif selon la revendication 1, **caractérisé en ce que** l'on charge dans un premier temps la capacité de sortie ($C_S$) et la capacité intermédiaire ($C_I$) avec un courant fourni par la source de courant, tandis que dans un deuxième temps on transfère la charge accumulée dans ladite capacité intermédiaire ($C_I$) dans la capacité de sortie ($C_S$) au moyen du circuit de transfert qui relie les bornes de la capacité intermédiaire ($C_I$) à celles de la capacité de sortie ($C_S$).

9. Procédé de fonctionnement d'un dispositif d'alimentation conforme à la revendication 7 et comportant deux capacités de sortie ($C_{S1}$ et $C_{S2}$) branchées à deux charges ($Z_{L1}$ et $Z_{L2}$), ainsi que deux capacités intermédiaires ($C_{I2}$ et $C_{I1}$) et deux circuits de transfert, **caractérisé en ce que** l'on charge les capacités de sortie ($C_{S1}$ et $C_{S2}$) et les capacités intermédiaires ($C_{I1}$ et $C_{I2}$) avec un courant fourni par la source de courant, on transfère une charge électrique accumulée dans la capacité intermédiaire ($C_{I1}$) à la capacité intermédiaire ($C_{I2}$), ainsi qu'aux capacités de sortie ($C_{S1}$, $C_{S2}$), puis on transfère une charge électrique accumulée dans la capacité intermédiaire ($C_{I2}$) aux capacités de sortie, de manière à alimenter les charges ($Z_{L1}$ et $Z_{L2}$) avec un courant moyen quatre fois supérieur à celui du courant prélevé à la source.

FIG. 1

# FIG. 2